# EUROPÄISCHE PATENTANMELDUNG

(11) **EP 1 617 041 A1**
(43) Veröffentlichungstag der Anmeldung: **18.01.2006**
(21) Anmeldenummer: 04405452.6
(22) Anmeldetag: 15.07.2004
(51) Int. Cl.: F01D 5/08, F01D 9/06, F02C 7/18

(54) **Abgasturbine für einen Turbolader mit luftgekülter Turbinenscheibe**

(71) Anmelder: ABB Turbo Systems AG, 5400 Baden (CH)
(72) Erfinder: Werro, Jean-Yves, 5415 Rieden (CH); Bättig, Josef, 5704 Egliswil (CH); Schaber, Ulrich, 5412 Gebenstorf (CH)
(74) Vertreter: ABB Patent Attorneys

(57) **Zusammenfassung**

Die Abgasturbine kann Teil eines Abgasturboladers sein. Sie enthält eine an einer drehbar gelagerten Nabe (4) gehaltene Turbinenscheibe (3), an deren Aussenrand (5) die Füsse (7) von radial ausgerichteten Laufschaufeln (6) gehalten sind. Sie weist ferner einen von einem Gaseintrittsgehäuse (9) und einem Düsenring (13) begrenzten Abgaskanal (11) auf und eine Vorrichtung zum Kühlen der Turbinenscheibe (3). Diese Kühlvorrichtung enthält einen an die Turbinenscheibe (3) angrenzenden Kühlraum (18), dem von aussen durch das Gaseintrittsgehäuse (9) Kühlluft zuführt werden kann. Der Kühlraum (18) nimmt einen Abschnitt (17) eines Zuführkanals (16) auf, der dem Transport der Kühlluft dient. Dieser Kanalabschnitt (17) ist derart ausgerichtet, dass zugeführte Kühlluft direkt an mindestens ein Segment des Aussenrandes (5) der Turbinenscheibe (3) geblasen wird.

Die mechanisch am höchsten beanspruchten Stellen der Turbinenscheibe (3) befinden sich am Aussenrand unter den Schaufelfüssen (7). Da die Kühlluft gezielt und ohne Umlenkung unmittelbar an den Aussenrand (5) der Turbinenscheibe (3) geblasen wird, werden bereits mit einer relativ kleinen Kühlluftmenge eine gute Kühlung und damit auch eine hohe mechanische Festigkeit der Turbinenscheibe (3) erreicht.

## Beschreibung

### TECHNISCHES GEBIET

Bei der Erfindung wird ausgegangen von einer Abgasturbine nach dem Oberbegriff von Patentanspruch 1. Abgasturbinen weisen im allgemeinen jeweils eine an einer drehbar gelagerten Nabe gehaltenen Turbinenscheibe auf, an deren Aussenrand die Füsse von radial ausgerichteten Laufschaufeln gehalten sind. Ferner enthalten die Abgasturbinen jeweils auch einen von einem Gaseintrittsgehäuse und einem Düsenring zur Steuerung einer Abgasströmung begrenzten Abgaskanal.

Abgasturbinen werden mit Vorteil in Turboladern eingesetzt und werden daher im Betrieb mit den Abgasen von Hubkolbenmotoren belastet. Da bei Hubkolbenmotoren der Entwicklungstrend hin zu immer höheren Abgastemperaturen geht, ist es nicht zu vermeiden, dass die Turbinenscheibe überaus starken thermischen Belastungen unterworfen ist. Daher ist es gebenenfalls erforderlich, eine Vorrichtung zum Kühlen der Turbinenscheibe vorzusehen mit einem an die Turbinenscheibe angrenzenden Kühlraum, dem von aussen durch das Gaseintrittsgehäuse Kühlluft zuführt werden kann.

### STAND DER TECHNIK

Eine Abgasturbine der eingangs genannten Art für einen Abgasturbolader ist beschrieben in JP 7097929 A (Patent Abstracts of Japan). Bei der beschriebenen Abgasturbine sind Laufschaufeln 2 am Aussenrand einer Turbinenscheibe 3 befestigt, welche ihrerseits über eine Welle 4 mit einen Verdichter verbunden ist. Ein in der Abgasturbine angeordneter Kühlraum 5 ist begrenzt durch die Turbinenscheibe 3, eine Wand 8, eine Labyrinthdichtung 7 und ein Gaseintrittsgehäuse 6. Ein Kühlrohr 9 ist von aussen durch die Wand 8 geführt und dient der Zufuhr von kühler Luft in den Kühlraum 5. Die zugeführte Luft kühlt die Nabe der nicht bezeichneten Turbinenscheibe und nach Abströmen durch die Labyrinthdichtung 7 und einen Kühlkanal 10 auch den Aussenrand der Turbinenscheibe 3 und die daran befestigten Laufschaufeln 2. Kühlkanäle in den Laufschaufeln 2 sind daher entbehrlich. Die Kühlluft wird hierbei durch die Turbinennabe aber auch durch Kontakt mit den heissen Wänden des Gaseintrittgehäuses 6 und eines nicht bezeichneten Düsenrings vorgewärmt und verliert dabei Kühlpotential, welches an den mechanisch am höchsten beanspruchten Stellen der Turbinenscheibe 3, nämlich an den Befestigungsstellen der Laufschaufeln 6, d.h. unter den Schaufelfüssen, fehlt.

### DARSTELLUNG DER ERFINDUNG

Die Erfindung, wie sie in den Patentansprüchen definiert ist, löst die Aufgabe, eine Abgasturbine der eingangs genannten Art und einen mit dieser Abgasturbine ausgerüsteten Turbolader anzugeben, welche sich trotz einer geringen Menge an eingesetztem Kühlmittel durch eine effektive Kühlung der Turbinenscheibe und damit durch eine hohe Betriebssicherheit auszeichnen.

Bei der Abgasturbine nach der Erfindung nimmt der Kühlraum einen Abschnitt eines Zuführkanals auf, der dem Transport von Kühlluft dient. Dieser Kanalabschnitt ist derart ausgerichtet, dass zugeführte Kühlluft direkt an mindestens ein Segment des Aussenrandes der Turbinenscheibe geblasen wird. Bei Betrieb der Abgasturbine in einem Turbolader wird die Kühlluft daher gezielt und ohne Umwege direkt an die mechanisch am höchsten beanspruchten Stellen der Turbinenscheibe geführt, nämlich an die am Aussenrand der Turbinenscheibe unter den Schaufelfüssen gelegenen und den grössten Fliehkräften ausgesetzten Befestigungsstellen der Laufschaufeln. Darüber hinaus ist der Kanalabschnitt gegenüber den heisses Abgas führenden Teilen der Abgasturbine thermisch isoliert im Kühlraum angeordnet, so dass die zugeführte Kühlluft in diesem Abschnitt keine Wärme aufnehmen kann. Mit einer kleinen Kühlluftmenge wird so bereits ein sehr effizienter Kühleffekt erreicht. Die zur Kühlung verwendete Luft wird im allgemeinen hinter dem Ladeluftkühler entnommen. Da die entnommene Luftmenge sehr gering ist, wird der Wirkungsgrad eines von dieser Abgasturbine aufgeladenen Hubkolbenmotors praktisch nicht reduziert.

In einer einfach und kostengünstig zu realisierenden Ausführungsform der Abgasturbine nach der Erfindung ist der im Kühlraum angeordnete Abschnitt des Zuführkanals rohrförmig ausgebildet. Die zugeführte Kühlluft wird dann zwar nur an einer Stelle gezielt an ein Segment des mechanisch hoch belasteteten Aussenrandes der Turbinenscheibe geblasen. Dadurch, dass im Betrieb jedoch die Abgasturbine rotiert, wirkt diese Kühlung gezielt und direkt am ganzen Umfang. Eine zusätzliche Verbesserung der Kühlwirkung kann dadurch erreicht werden, dass der Kühlraum mindestens zwei rohrförmig ausgeführte Kanalabschnitte aufnimmt, die jeweils derart ausgerichtet sind, dass zugeführte Kühlluft direkt an mindestens zwei Segmente des Aussenrandes der Turbinenscheibe geblasen wird.

In einer weiteren Ausführungsform der Abgasturbine nach der Erfindung ist der Kanalabschnitt als Ringkammer ausgebildet, welche in Umfangsrichtung um die Nabe geführt ist und den Kühlraum in einen die Nabe umfassenden Innenraum und einen die Ringkammer umfassenden Aussenraum aufteilt. Bei dieser Ausführungsform wird der gesamte Aussenrand der Turbinenscheibe gleichzeitig mit Kühlluft beblasen und wird so eine besonders wirksame Kühlung erreicht.

Die in der Ringkammer befindliche Kühlluft hält sich dann besonders lange kalt, wenn der Innenraum durch eine Innendichtung und der Aussenraum durch eine Aussendichtung von der Ringkammer getrennt ist. Die Innen- und die Aussendichtungen vermindern nämlich das Mischen der Kühlluft mit der wärmeren Luft des Innen- und des Aussenraums stark. Durch die Rotation der Turbinenscheibe findet dennoch Luftaustausch durch die Innendichtung zwischen der Ringkammer und dem Innenraum statt. Dieser Luftaustausch sorgt für die Kühlung des Innenraums.

Mit Vorteil enthält die Aussendichtung einen zwischen dem Aussenrand der Turbinenscheibe und einer aussenliegenden Wand der Ringkammer und die Innendichtung einen zwischen der Turbinenscheibe und einer innenliegenden Wand der Ringkammer angeordneten Ringspalt.

Ist die von der Turbinenscheibe abgewandte Seite des Kühlraums von einer gegenüber dem Gaseintrittsgehäuse thermisch isolierten Trennwand gebildet, sind Aussen- und Innenwand der Ringkammer an dieser Trennwand befestigt, und ist in der Trennwand eine Öffnung vorgesehen, welche einen ins Gaseintrittsgehäuse geführten Abschnitt des Zuführkanals mit dem Ringraum verbindet, so wird verhindert, dass durch das Abgas aufgeheizte, heisse Teile des Gaseintrittsgehäuse in Wärmekontakt mit der Luft des Innenraums kommen. Dem Innenraum wird daher wenig Wärme zugeführt und die Turbinennabe dementsprechend kühl gehalten. Eine besonders starke Wirkung wird dann mit der Trennwand erzielt, wenn diese im Inneren eines als Gehäuseabdeckung ausgeführten und von aussen mit Abgas beaufschlagbaren Teils des Gaseintrittsgehäuses angeordnet ist.

Unerwünschtes heisses Abgas wird vom Kühlraum besonders wirksam ferngehalten, wenn der Kühlraum durch eine Abgasdichtung vom Abgaskanal getrennt ist. Enthält die Abgasdichtung einen zwischen dem Düsenring und dem Aussenrand der Turbinenscheibe angeordneten Ringspalt, so wirkt die Luft nicht nur als Kühlmedium, sondern auch als Sperrluft in der Dichtstelle. Dank dieser guten Abdichtung kann das heisse Abgas nicht in Aussenraum und noch weniger in die durch die Aussendichtung gesicherte Ringkammer eindringen. Dadurch wird die Temperatur in der Ringkammer und im Aussenraum kalt gehalten.

### KURZE BESCHREIBUNG DER ZEICHNUNGEN

Die Erfindung wird nachstehend anhand von Ausführungsbeispielen näher erläutert. Hierbei zeigt:
- Fig.1: eine Aufsicht auf einen längs der Drehachse des Rotors eines Abgasturboladers geführten Schnitt durch einen oberhalb der Achse gelegenen Teil einer ersten Ausführungsform einer Abgasturbine nach der Erfindung, und
- Fig.2: eine Aufsicht auf einen entsprechend Fig.1 geführten Schnitt durch einen oberhalb der Achse gelegenen Teil einer zweiten Ausführungsform einer Abgasturbine nach der Erfindung.

### WEGE ZUR AUSFÜHRUNG DER ERFINDUNG

In beiden Figuren beziehen sich gleiche Bezugszeichen auf gleichwirkende Teile. In beiden Figuren ist von einem Abgasturbolader lediglich das Turbinenteil mit einer Abgasturbine dargestellt. Diese Abgasturbine weist einen um eine Achse 1 drehbaren Rotor 2 mit einem als kreisförmige Scheibe 3 ausgeführten Turbinenlaufrad auf. Die Turbinenscheibe 3 ist mit einer Nabe 4 an einer nicht bezeichneten Welle des Rotors 2 befestigt. In den Aussenrand 5 der Turbinenscheibe 3 sind Materialausnehmungen eingeformt zur Aufnahme der Schaufelfüsse von Laufschaufeln. Aus den Figuren ist jeweils lediglich eine Laufschaufel 6 mit dem Schaufelfuss 7 ersichtlich.

Der Rotor 2 ist in gasdichter Weise aus einem Turbinengehäuse 8 zu einer nicht dargestellten Lagerstelle geführt und trägt an seinem links gelegenen Ende ein aus den Figuren ebenfalls nicht mehr ersichtliches Verdichterrad.

Das Turbinengehäuse 8 enthält ein Gaseintrittsgehäuse 9 mit einer axialsymmetrisch angeordneten Eintrittsöffnung 10 zur Aufnahme von heissem Abgas aus einer nicht dargestellten Abgasquelle, insbesondere einem Hubkolbenmotor. Der Eintrittsöffnung 10 schliesst sich ein als Ringraum ausgeführter Abgaskanal 11 an, in dem das heisse Abgas in einer durch Pfeile 15 symbolisierten Abgasströmung geführt ist. Der Abgaskanal 11 ist auf seiner Innenseite von einer als Kalotte ausgeführten Gehäuseabdeckung 12 des Gaseintrittsgehäuses 9 und einem die Abgasströmung 15 steuernden Düsenring 13 und auf seiner Aussenseite von einem die Gehäuseabdeckung 12 mit Abstand umgebenden Teil 14 des Gaseintrittsgehäuse 9 und dem Düsenring 13 begrenzt. Die Gehäuseabdeckung 12 ist ersichtlich einstückig in das Gaseintrittsgehäuse 9 integriert, kann aber auch - insbesondere bei Gaseintrittsgehäusen mit radialem Gaseintritt oder mit mehren Gaseintrittsstellen - als separater Deckel ausgeführt sein.

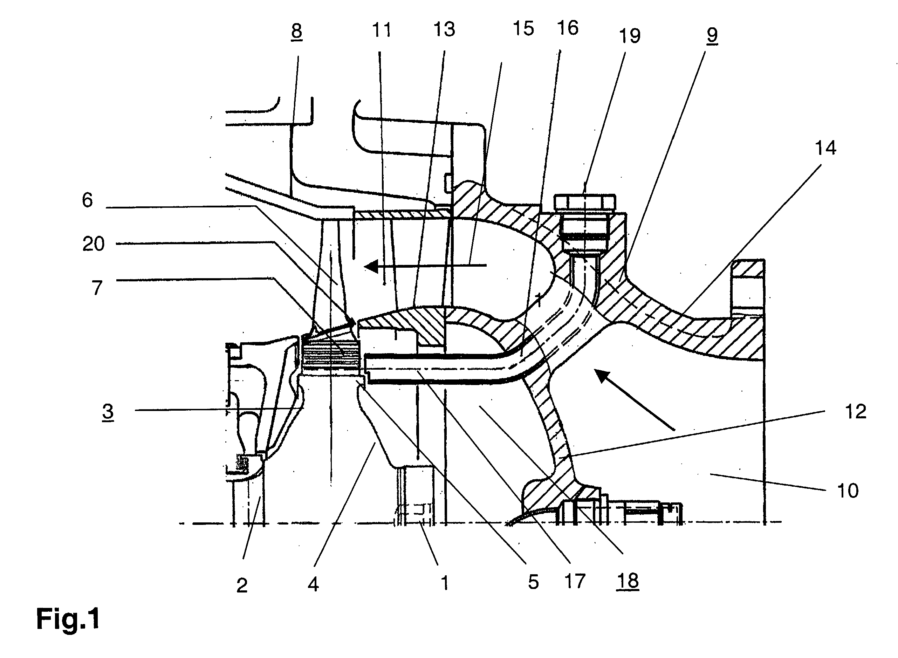

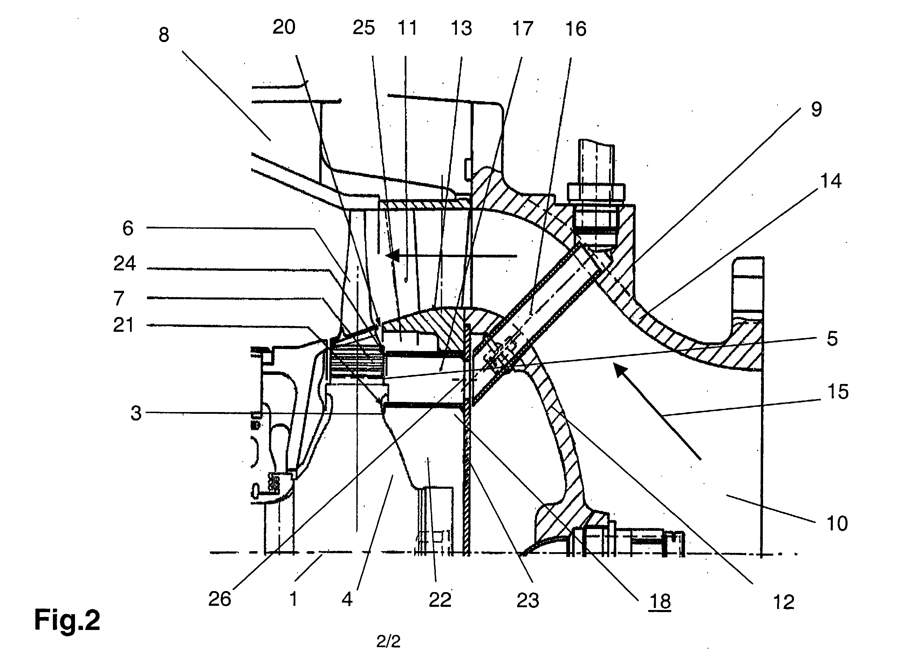

Aus beiden Figuren ist auch ein Zuführkanal 16 ersichtlich. Dieser Kanal ist radial gegenüber der Achse 1 versetzt von aussen durchs Gaseintrittsgehäuse 9 in einen von der Gehäuseabdeckung 12, der Turbinenscheibe 3 und dem Düsenring 13 begrenzten Kühlraum 18 geführt. Er weist einen vom Kühlraum 18 umschlossenen Abschnitt 17 auf, welcher bis an den Aussenrand 5 der Turbinenscheibe 3 geführt ist. Der Zuführkanal 16 kann nach Entfernen einer Verschlusskappe 19 (Fig.1 ) mit einer Kühlluftquelle, etwa dem Ausgang eines Ladeluftkühlers, verbunden werden (Fig.2). Der Kühlraum 18 ist durch eine Abgasdichtung 20 von Abgaskanal 11 getrennt. Diese Abgasdichtung weist einen zwischen dem Düsenring 13 und dem Aussenrand der Turbinenscheibe 3 angeordneten Ringspalt auf.

Bei der Ausführungsform nach Fig.1 ist der Kanalabschnitt 17 rohrförmig ausgeführt. Von aussen durch den Zuführkanal 16 zugeführte Kühlluft wird nun direkt gegen ein Segment des Aussenrandes 5 der Turbinenscheibe 3 geblasen. Diese Luft kühlt zunächst nur das angeblasene Segment am Aussenrand 5 der Turbinenscheibe 3. Durch die Rotation der Abgasturbine wirkt jedoch die zugeführte Kühlluft am ganzen Aussenrand 5 der Turbinenscheibe 3. Die Wirksamkeit der Kühlluft wird dadurch erhöht, dass anstelle nur eines Kanalabschnitts 17 zwei oder mehr solcher Abschnitte durch den Kühlraum 18 geführt sind. Die zugeführte Kühlluft wird dann direkt gegen zwei oder mehr über den Aussenrand verteilte Segmente geblasen.

Danach verteilt sich die Luft im Kühlraum 18 und wirkt nicht nur als Kühlmedium, sondern auch als Sperrluft in der Abgasdichtung 20. Heisses Abgas 15 aus dem Abgaskanal 11 kann nicht in den Kühlraum 18 eindringen. Dadurch wird die Temperatur im Kühlraum tief gehalten und die Nabe 4 gut gekühlt.

Der Kanalabschnitt 17 muss nicht notwendigerweise bis dicht an die Turbinenscheibe geführt werden. Eine gute Kühlung des Aussenrandes der Turbinenscheibe wird auch dann erreicht, wenn der Kanalabschnitt 17 abweichend von seiner Darstellung in Fig.1 eine geringere Länge aufweist und beispielsweise nur halb so lang ist wie der in Fig.1 dargestellte Abschnitt 17 oder gegebenenfalls auch kürzer ist. Wichtig ist dann, dass die Kühlluft in Form eines Freistrahl direkt und ohne Umwege das Segment des zu kühlenden Aussenrandes anströmt.

Bei der Ausführungsform nach Fig.2 ist der Kanalabschnitt 17 als Ringkammer, welche in Umfangsrichtung um die Nabe 4 geführt ist, ausgebildet. Die Wände der Ringkammer 17 berühren praktisch keine abgasführenden und daher heissen Teile, wie das Gaseintrittsgehäuse 9 und den Düsenring 13, und bleiben daher thermisch isoliert. Eine Seite der Ringkammer 17 wird begrenzt vom Teil der Turbinenscheibe 3, der sich unter den Schaufelfüssen 7 befindet. An der Innenkante der Ringkammer 17 bildet ein enger Spalt zwischen der Ringkammer 17 und der Turbinenscheibe 3 eine Innendichtung 21. Die Innendichtung 21 trennt die Ringkammer 17 von einem Innenraum 22 des Kühlraums 18. Der Innenraum 22 ist an der von der Turbinenscheibe 3 abgewandten Seite des Kühlraums 18 von einer gegenüber dem Gaseintrittsgehäuse 9 thermisch isolierten Trennwand 23 begrenzt. Die Trennwand 23 ist im Inneren der mit dem Abgas 15 beaufschlagten Gehäuseabdeckung 12 abgestützt und isoliert so den Innenraum 22 bzw. den Kühlraum 18 thermisch. An der Aussenkante der Ringkammer 17 bildet ein enger Spalt zwischen der Ringkammer 17 und der Turbinenscheibe 3 eine Aussendichtung 24. Die Aussendichtung 24 trennt die Ringkammer 17 von einem Aussenraum 25 des Kühlraums 18. Aussen- und Innenwand der Ringkammer 17 sind an der Trennwand 23 befestigt. In der Trennwand 23 ist eine Öffnung 26 vorgesehen ist, welche einen ins Gaseintrittsgehäuse 9 geführten Abschnitt des Zuführkanals 16 mit dem Ringraum 17 verbindet.

Bei dieser Ausführungsform der erfindungsgemässen Abgasturbine gelangt Kühlluft über den Zuführkanal 16 und die Öffnung 26 direkt in die Ringkammer 17 und wird von dort auf den gesamten Aussenrand 5 der Turbinenscheibe 3 geblasen. Hierdurch werden die thermisch und mechanisch hoch belasteten Bereiche der Turbinenscheibe 3 in Bereich der Schaufelfüsse 7 thermisch entlastet. Die Abgasturbine kann daher selbst bei Betrieb mit äusserst heissen Abgasen und bei Zufuhr relativ kleiner Mengen an Kühlluft mechanisch hoch belastet werden. Die Innen- 21 und die Aussendichtung 24 vermindern das Mischen der Kühlluft mit der wärmeren Luft des Innen- 22 und des Aussenraums 25 stark. So bleibt die Luft in der Ringkammer 17 kalt und kühlt effizient und gezielt den unter den Schaufelfüssen befindlichen hoch beanspruchten Teil der Turbinenscheibe 3.

Danach strömt kalte Luft durch die Aussendichtung 24 in den Aussenraum 25 und nachfolgend durch die Abgasdichtung 20 in den Abgaskanal 11. Bei der Aussen- 24 und Abgasdichtung 20 wirkt die Luft nicht nur als Kühlmedium, sondern auch als Sperrluft in den Dichtsteilen. Dank dieser guten Abdichtung dringt wenig heisses Abgas 15 in den Aussenraum 25 und entsprechend noch weniger in die Ringkammer 17 ein. Dadurch werden die in Ringkammer 17 und Aussenraum 25 herrschenden Temperaturen tief gehalten.

Infolge der rotierenden Turbinenscheibe findet Luftaustausch durch die Innendichtung 21 zwischen der Ringkammer 17 und dem Innenraum 22 statt. Dieser Luftaustausch sorgt für die Kühlung des Innenraums 22. Die Trennwand 23 verhindert, dass die heisse Kalotte 12 in Kontakt mit der Luft des Innenraums 22 kommt. Dadurch wird dem Innenraum 22 wenig Wärme zugeführt und die Turbinennabe 4 gut gekühlt.

Die Ausführungsform gemäss Fig.2 kühlt besonders effizient. Die Kühlluft kann daher sowohl hinter dem Ladeluftkühler als auch direkt hinter dem Verdichtergehäuse entnommen werden.

### Bezugszeichenliste

- 1: Drehachse
- 2: Rotor
- 3: Turbinenscheibe
- 4: Nabe
- 5: Aussenrand
- 6: Laufschaufel
- 7: Schaufelfuss
- 8: Turbinengehäuse
- 9: Gaseintrittsgehäuse
- 10: Eintrittsöffnung
- 11: Abgaskanal
- 12: Kalotte, Gehäuseabdeckung
- 13: Düsenring
- 14: Gehäuseteil
- 15: Abgasströmung
- 16: Kühlkanal
- 17: Kanalabschnitt, Ringkammer
- 18: Kühlraum
- 19: Verschlusskappe
- 20: Abgasdichtung
- 21: Innendichtung
- 22: Innenraum
- 23: Trennwand
- 24: Aussendichtung
- 25: Aussenraum
- 26: Öffnung

## Patentansprüche

1. Abgasturbine mit einer an einer drehbar gelagerten Nabe (4) gehaltenen Turbinenscheibe (3), an deren Aussenrand (5) die Füsse (7) von radial ausgerichteten Laufschaufeln (6) gehalten sind, mit einem von einem Gaseintrittsgehäuse (9) und einem Düsenring (13) begrenzten Abgaskanal (11) und mit einer Vorrichtung zum Kühlen der Turbinenscheibe (3), enthaltend einen an die Turbinenscheibe (3) angrenzenden Kühlraum (18), dem von aussen durch das Gaseintrittsgehäuse (9) Kühlluft zuführbar ist, **dadurch gekennzeichnet, dass** der Kühlraum (18) einen Abschnitt (17) eines Zuführkanals (16) aufnimmt, welcher Kanalabschnitt (17) der Zufuhr von Kühlluft dient und derart ausgerichtet ist, dass mindestens ein Segment des Aussenrandes (5) der Turbinenscheibe (3) direkt mit Kühlluft beblasbar ist.

2. Abgasturbine nach Anspruch 1, **dadurch gekennzeichnet, dass** der Kanalabschnitt (17) rohrförmig ausgeführt ist.

3. Abgasturbine nach Anspruch 2, **dadurch gekennzeichnet, dass** der Kühlraum (18) mindestens zwei rohrförmig ausgeführte Kanalabschnitte aufnimmt, die jeweils derart ausgerichtet sind, dass mindestens zwei Segment des Aussenrandes (5) der Turbinenscheibe (3) direkt mit Kühlluft beblasbar sind.

4. Abgasturbine nach Anspruch 1, **dadurch gekennzeichnet, dass** der Kanalabschnitt (17) als Ringkammer ausgebildet ist, welche Ringkammer (17) in Umfangsrichtung um die Nabe (4) geführt ist und den Kühlraum (18) in einen die Nabe (4) umfassenden Innenraum (22) und einen die Ringkammer (17) umfassenden Aussenraum (25) aufteilt.

5. Abgasturbine nach Anspruch 4, **dadurch gekennzeichnet, dass** der Innenraum (22) durch eine Innendichtung (21) und der Aussenraum (25) durch eine Aussendichtung (24) von der Ringkammer (17) getrennt ist.

6. Abgasturbine nach Anspruch 5, **dadurch gekennzeichnet, dass** die Aussendichtung (24) einen zwischen dem Aussenrand (5) der Turbinenscheibe (3) und einer aussenliegenden Wand der Ringkammer angeordneten Ringspalt enthält.

7. Abgasturbine nach einem der Ansprüche 5 oder 6, **dadurch gekennzeichnet, dass** die Innendichtung (21) einen zwischen der Turbinenscheibe (3) und einer innenliegenden Wand der Ringkammer angeordneten Ringspalt enthält.

8. Abgasturbine nach einem der Ansprüche 4 bis 7, **dadurch gekennzeichnet, dass** die von der Turbinenscheibe (3) abgewandte Seite des Kühlraums (18) von einer gegenüber dem Gaseintrittsgehäuse (9) thermisch isolierten Trennwand (23) gebildet ist, dass Aussen- und Innenwand der Ringkammer (17) an der Trennwand (23) befestigt sind, und dass in der Trennwand (23) eine Öffnung (26) vorgesehen ist, welche einen ins Gaseintrittsgehäuse (9) geführten Abschnitt des Zuführkanals (16) mit dem Ringraum (17) verbindet.

9. Abgasturbine nach Anspruch 8, **dadurch gekennzeichnet, dass** die Trennwand (23) im Inneren einer von aussen mit heissem Abgas beaufschlagbaren Gehäuseabdeckung (12) des Gaseintrittsgehäuses (9) angeordnet ist.

10. Abgasturbine nach einem der Ansprüche 1 bis 9, **dadurch gekennzeichnet, dass** der Kühlraum (18) durch eine Abgasdichtung (20) vom Abgaskanal (11) getrennt ist.

11. Abgasturbine nach Anspruch 10, **dadurch gekennzeichnet, dass** die Abgasdichtung (20) einen zwischen dem Düsenring (13) und dem Aussenrand (5) der Turbinenscheibe (3) angeordneten Ringspalt enthält.

12. Turbolader mit einer Abgasturbine nach einem der Ansprüche 1 bis 11.
